# EUROPEAN PATENT APPLICATION

(11) **EP 4 679 698 A1**
(43) Date of publication of application: **14.01.2026**
(21) Application number: 23938460.5
(22) Date of filing: 23.05.2023
(51) Int. Cl.: H02M 3/28

(54) **POWER CONVERSION DEVICE AND METHOD FOR CONTROLLING SAME**

(71) Applicant: MAZDA MOTOR CORPORATION, Hiroshima 730-8670 (JP)
(72) Inventor: LUNG, Chienru, Aki-gun, Hiroshima 730-8670 (JP)
(74) Representative: Lorenz Seidler Gossel Part. mbB
(86) International application number: PCT/JP2023/019156
(87) International publication number: WO 2024/241492

(57) **Abstract**

Disclosed is a DC/DC converter 1 including: at least one transformer 11; at least one primary-side half-bridge circuit 12; an LLC circuit 10 including a resonant capacitor 13 connected to one end of a primary coil 11a, and a primary-side intermediate wiring 16 that connects another end of the primary coil 11a to a portion between two power devices 15 of the primary-side half-bridge circuit 12; and a controller 30 configured to control the DC/DC converter 1. The controller 30 generates a PWM signal based on control theory of a fundamental space vector and controls switching of each of switching elements 15a based on the PWM signal.

## Description

### TECHNICAL FIELD

The technique disclosed herein relates to a power conversion device and a method of controlling the same.

### BACKGROUND ART

As a power conversion device, there is a DC/DC converter that converts DC power. In recent years, DC/DC converters that employ an LLC circuit (resonance circuit) including two coils and one capacitor as main parts have been increasing. The LLC circuit is advantageous for large power, low loss, high efficiency, downsizing, or the like.

Electrification of motor vehicles is progressing. Thus, more motor vehicles are now equipped with a high voltage drive battery (e.g., several hundred volts), which serves as the power source for the drive motor that propels the motor vehicle. These motor vehicles are also equipped with a DC/DC converter as a drive-related electrical component, together with an inverter or the like.

For an in-vehicle drive battery, a shorter charging time is regarded as important in terms of convenience. To shorten the charging time, an in-vehicle DC/DC converter requires a circuit and a control method capable of handling large power. The in-vehicle DC/DC converter also requires an insulation function between a high-voltage circuit and a low-voltage circuit in view of safety and the like.

Under such circumstances, three-phase LLC circuits are considered to deal with issues such as large power, low loss, high efficiency, downsizing, and the like relatively easily, when combined with zero voltage switching (ZVS) operation.

A DC/DC converter that employs a three-phase LLC circuit is disclosed in Patent Document 1.

Patent Document 1 discloses a technique to prevent an imbalance of the current flowing through each switching element when overcurrent protection occurs.

### CITATION LIST

### PATENT DOCUMENTS

Patent Document 1: Japanese Unexamined Patent Publication No. 2023-23105

### SUMMARY OF THE INVENTION

### TECHNICAL PROBLEMS

As seen in the DC/DC converter of Patent Document 1, the primary-side part of a three-phase LLC circuit generally has six switching elements. Accordingly, a DC/DC converter that employs a three-phase LLC circuit needs to control each of these switching elements by PWM.

Therefore, in a DC/DC converter of this type, it is common to use a control device capable of at least six PWM controls.

However, such a control device is expensive. Therefore, this type of DC/DC converter is disadvantageous in terms of cost. Despite the above-described advantages, DC/DC converters employing LLC circuits, and particularly DC/DC converters employing three-phase LLC circuits, have not been widely adopted. This is believed to be due to their high cost.

Accordingly, this description discloses a technique that enables a plurality of PWM controls using an inexpensive control device. The technique enables a low-cost power conversion device suitable for an in-vehicle DC/DC converter or the like.

### SOLUTION TO THE PROBLEMS

The technique disclosed herein relates to a power conversion device configured to convert input DC power and output the converted power.

The power conversion device includes: at least one transformer having a primary coil and a secondary coil; at least one primary-side half-bridge circuit in which two power devices are connected in series to each other, the power devices each including a switching element and a freewheeling diode connected in antiparallel with the switching element; an LLC circuit including a resonant capacitor connected to one end of the primary coil, and a primary-side intermediate wiring that connects another end of the primary coil to a portion between the two power devices of the primary-side half-bridge circuit; and a controller configured to control the power conversion device.

The controller is configured to generate a PWM signal based on control theory of fundamental space vector voltage and control switching of each of the switching elements based on the PWM signal.

That is, the power conversion device includes an LLC circuit. Therefore, as mentioned above, it is advantageous in addressing large power, low loss, high efficiency, downsizing, or the like. The controller that controls this power conversion device is configured to generate a PWM signal based on control theory of fundamental space vector voltage, and control the switching of each of switching elements based on the PWM signal.

Thus, switching control is performed using a very simple signal. This power conversion device does not require an expensive control device. This power conversion device can be controlled with minimal hardware. As a result, a plurality of PWM controls can be performed by an inexpensive control device.

More specifically, the controller may include: an IC; and a gate driver circuit electrically connected to the IC and each of the switching elements, and the IC, according to a set frequency input thereto, may generate the PWM signal based on either a high signal corresponding to "1" or a low signal corresponding to "0," and output the PWM signal to the gate driver circuit via a logic circuit, whereby the gate driver circuit outputs drive power in a predetermined switching pattern to each of the switching elements.

This enables the circuit to be very simple. Since there is no complex and redundant hardware, the cost of the controller can be very low.

For example, the IC may be any one of an MPU, an FPGA, or a CPLD.

These ICs are relatively simple in structure and inexpensive. Therefore, this is suitable for the above-described control.

The power conversion device may be configured such that the set frequency is varied only during startup.

By doing so, the set frequency gradually decreases from a high value (F_LLC > Fr), so that the output current flows less easily due to the drooping of the output voltage, and the inrush current at startup can be suppressed. Therefore, the power conversion device can be properly started.

The power conversion device may be such that the at least one transformer comprises one transformer, the at least one primary-side half-bridge circuit comprises two primary-side half-bridge circuits, the power conversion device further includes: two rectifier bridge circuits in each of which two diodes are connected in series to each other; and a secondary-side intermediate wiring connecting each of ends of the secondary coil and a portion between the two diodes of a corresponding one of the rectifier bridge circuits, and the power conversion device may be configured to convert the DC power and unidirectionally output the DC power thus converted, from a primary side to a secondary side.

That is, this is one of specific examples of a power conversion device suitable for the technique disclosed herein. This power conversion device is configured to convert and output in one direction using a single full-bridge circuit (H-bridge circuit).

The power conversion device may be such that the at least one transformer comprises one transformer, the at least one primary-side half-bridge circuit comprises two primary-side half-bridge circuits, the power conversion device further includes: two secondary-side half-bridge circuits in each of which the two power devices are connected in series to each other; and a secondary-side intermediate wiring connecting each of ends of the secondary coil and a portion between the two power devices of a corresponding one of the secondary-side half-bridge circuits, and the power conversion device may be configured to convert the DC power and bidirectionally output the DC power thus converted, from a primary side to a secondary side and from the secondary side to the primary side.

This is also one of the specific examples of a power conversion device suitable for the technique disclosed herein. This power conversion device is configured to perform conversion and bidirectional output using a single full-bridge circuit.

The power conversion device may include three power conversion circuits, whereby the DC power input from three pairs of input terminals is converted, and the DC power thus converted is output from a pair of output terminals, wherein each of the power conversion circuits may include: one transformer of the at least one transformer; two primary-side half-bridge circuits of the at least one primary-side half-bridge circuit; the LLC circuit; the power conversion device further includes: two rectifier bridge circuits in each of which two diodes are connected in series to each other; and a secondary-side intermediate wiring connecting each of ends of the secondary coil and a portion between the two diodes of a corresponding one of the rectifier bridge circuits, and each of the input terminals may be arranged at a portion on a primary side of a corresponding one of the power conversion circuits, and the output terminals may be arranged at a portion where secondary sides of the power conversion circuits are connected in parallel to each other, whereby the DC power is converted and the DC power thus converted is output unidirectionally from the primary side to the secondary sides.

This is also one of the specific examples of a power conversion device suitable for the technique disclosed herein. This power conversion device is configured to perform output from three input terminals to a single output terminal by using three parallel full-bridge circuits.

The power conversion device may be such that a three-phase interleaved scheme is employed, three of each of the transformer, the primary-side half-bridge circuit, and the LLC circuit are provided to correspond to the three phases, the power conversion device may further include: three rectifier bridge circuits in each of which two diodes are connected in series to each other; a secondary-side upper intermediate wiring connecting each of positive sides of the secondary coils in the transformers of the respective phases and a portion between the two diodes in a corresponding one of the rectifier bridge circuits; a secondary-side lower intermediate wiring connecting each of negative sides of the secondary coils in the transformers of the respective phases in parallel to each other; and a primary-side lower intermediate wiring connecting each of negative sides of the primary coils in parallel to each other via the resonant capacitor, and the power conversion device may be configured to convert the DC power and unidirectionally output the DC power thus converted, from a primary side to a secondary side.

This is also one of the specific examples of a power conversion device suitable for the technique disclosed herein. This power conversion device employs a three-phase interleaved scheme (a scheme in which three circuits sharing some components are synchronously operated with their phases shifted) and is configured to convert and perform output in one direction.

The power conversion device may be such that a three-phase interleaved scheme is employed, three of each of the transformer, the primary-side half-bridge circuit, and the LLC circuit are provided to correspond to the three phases, the power conversion device may further include: three secondary-side half-bridge circuits in each of which the two power devices are connected in series to each other; a secondary-side upper intermediate wiring connecting each of positive sides of the secondary coils in the transformers of the respective phases and a portion between the two power devices in a corresponding one of the secondary-side half-bridge circuits; a primary-side lower intermediate wiring connecting each of negative sides of the primary coils in parallel to each other via the resonant capacitor; and a secondary-side lower intermediate wiring connecting each of negative sides of the secondary coils in the transformers of the respective phases in parallel to each other via a secondary-side resonant capacitor, and the power conversion device may be configured to convert the DC power and bidirectionally output the DC power thus converted, from a primary side to a secondary side and from the secondary side to the primary side.

This is also one of the specific examples of a power conversion device suitable for the technique disclosed herein. This power conversion device employs a three-phase interleaved scheme and is configured to convert and perform bidirectional output.

The technique disclosed herein also relates to a method of controlling a power conversion device employing an LLC scheme.

The method includes: generating, using an IC, a PWM signal based on control theory of a fundamental space vector; and controlling switching of each of switching elements in a half-bridge circuit provided in the power conversion device based on the PWM signal.

This control method does not require complex control and can be achieved using a very inexpensive controller.

For example, the IC may be any one of an MPU, an FPGA, or a CPLD.

These ICs are relatively inexpensive, so the power conversion device can be achieved at a low cost.

The control method may be such that a set frequency that is input to the IC to output the PWM signal is variable only during startup.

By doing so, as mentioned above, the set frequency can be varied to gradually decrease from a high value, allowing the power conversion device to start up properly.

### ADVANTAGES OF THE INVENTION

According to the technique disclosed herein, a plurality of PWM controls can be performed by an inexpensive control device. As a result, it is possible to provide a low-cost power conversion device suitable for an in-vehicle DC/DC converter or the like.

### BRIEF DESCRIPTION OF DRAWINGS

[FIG. 1] FIG. 1 is an explanatory diagram of a basic configuration of the technique disclosed herein.
[FIG. 2] FIG. 2 is an example of a circuit configuration of a DC/DC converter.
[FIG. 3] FIG. 3 is a block diagram showing a circuit configuration of a controller.
[FIG. 4] FIG. 4 is an explanatory diagram of a control operation of the controller.
[FIG. 5] FIG. 5 is a resonance curve of an LLC circuit.
[FIG. 6] FIG. 6 is a diagram showing the results of a simulation test to confirm the effects.
[FIG. 7] FIG. 7 is Variation 1 of the circuit configuration of the DC/DC converter.
[FIG. 8] FIG. 8 is Variation 2 of the circuit configuration of the DC/DC converter.
[FIG. 9] FIG. 9 is a block diagram showing a circuit configuration of a controller in Variation 2.
[FIG. 10] FIG. 10 is Variation 3 of the circuit configuration of the DC/DC converter.
[FIG. 11] FIG. 11 is a block diagram showing a circuit configuration of a controller in Variation 3.
[FIG. 12] FIG. 12 is Variation 4 of the circuit configuration of the DC/DC converter.

### DESCRIPTION OF EMBODIMENTS

Hereinafter, embodiments of the technique disclosed herein will be described. It should be noted that the following description is merely illustrative in nature. In the description, the same reference characters are used for the same components. When there are a plurality of identical components, these components may be distinguished from each other by alphabets or the like. For convenience of description, the same members may be denoted by different reference characters.

### <Basic Configuration of Technique Disclosed Herein>

The technique disclosed herein relates to a power conversion device configured to convert input DC power and output the converted power. The technique disclosed herein is suitable for, for example, in-vehicle DC/DC converters. The following disclosure explains the technique using an in-vehicle DC/DC converter 1 as an example.

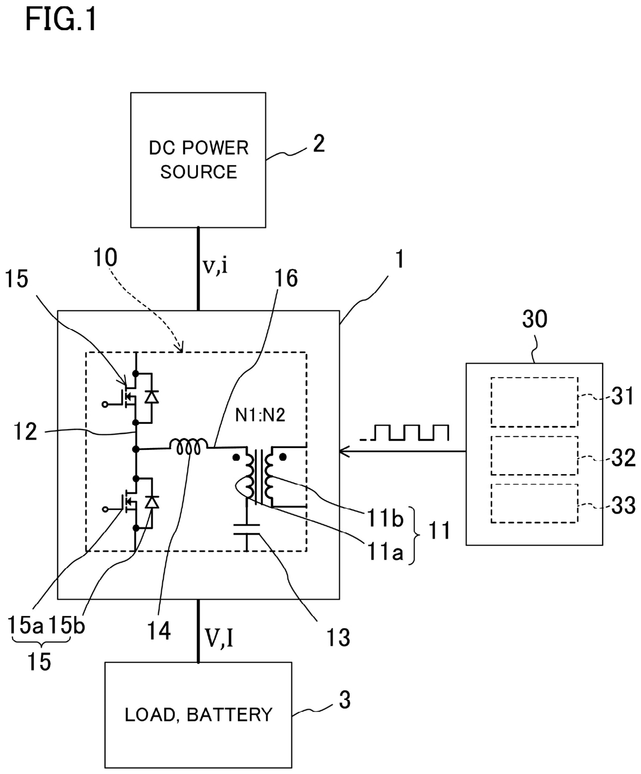

FIG. 1 schematically shows a configuration of a basic system of a DC/DC converter 1 to which the technique disclosed herein is applied. An input side of the DC/DC converter 1 is connected to a DC power source 2, such as a drive battery, via wiring for high voltage. The output side of the DC/DC converter 1 is connected to a device 3, such as a load (e.g., drive motor) and battery, via wiring for high voltage. The DC/DC converter 1 converts DC power (current and voltage) input from the DC power source 2 into different DC power and outputs the same to a device 3 such as a load and a battery.

The DC/DC converter 1 employs an LLC scheme. That is, the DC/DC converter 1 includes a publicly known LLC circuit 10 as will be described later. The DC/DC converter 1 is a so-called LLC converter. Therefore, the DC/DC converter 1 has a circuit including a transformer 11, a primary-side half-bridge circuit 12, a resonant capacitor 13, a resonant inductance 14 (leakage inductance), and the like, as shown in FIG. 1.

The transformer 11 has a primary coil 11a and a secondary coil 11b. N1 is the number of turns of the primary coil 11a, and N2 is the number of turns of the secondary coil 11b. N1:N2 represents a turns ratio. In the primary-side half-bridge circuit 12, two power devices 15 are connected in series to each other. The power devices 15 each include a switching element 15a and a freewheeling diode 15b connected in antiparallel with the switching element 15a. Examples of the switching element 15a includes MOSFET, IGBT, and the like.

An end of the primary coil 11a on the positive side is connected, via primary-side intermediate wiring 16, to a portion between two power devices 15 of the primary-side half-bridge circuit 12. The resonant inductance 14 is arranged on the primary-side intermediate wiring 16. The resonant inductance 14 may be a parasitic element of the transformer 11.

The resonant capacitor 13 is connected to an end of the primary coil 11a on the negative side. In general, the LLC circuit 10 includes two inductances and one capacitor. Specifically, the LLC circuit 10 includes the resonant inductance 14, a magnetizing inductance, and the resonant capacitor 13. In an equivalent circuit, the magnetizing inductance is connected in parallel with the primary coil 11a. The magnetizing inductance is not shown in the figure.

The DC/DC converter 1 is also connected to a controller 30 via wiring for low voltage. The controller 30 controls the operation of the DC/DC converter 1. The controller 30 has an IC 31, a logic circuit 32, a gate driver circuit 33, and the like, as will be detailed later.

The controller 30 is designed so as not to require complicated arithmetic operations. As will be specifically described later, the IC 31 generates a PWM signal including one square-shaped pulse, based on the concept of a fundamental space vector voltage, to perform switching control.

Then, the IC 31 performs control (one-pulse control) that outputs the PWM signal to the gate driver circuit 33 via the logic circuit 32. Based on the PWM signal, the gate driver circuit 33 outputs drive voltage (drive power) in a predetermined switching pattern to each switching element 15a. In this way, the controller 30 controls switching of each switching element 15a.

As a result, the controller 30 can use a significantly inexpensive IC 31. For example, the controller 30 can use an IC having a relatively low processing capability, such as a micro processing unit (MPU), a field programmable gate array (FPGA), or a complex programmable logic device (CPLD). Since the configuration is simple, an IC dedicated to the controller 30 may be manufactured and used as IC 31.

### (Specific Example of Power Conversion Device)

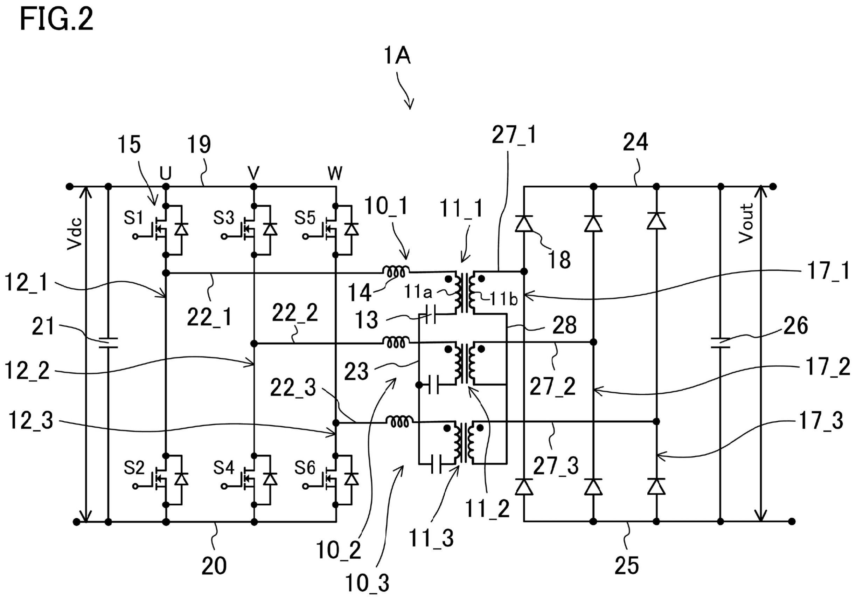

FIG. 2 shows an example of the circuit configuration of a DC/DC converter 1A to which the technique disclosed herein is applied. The DC/DC converter 1A employs an interleaved scheme of three phases including a U-phase, a V-phase, and a W-phase (a scheme in which three circuits sharing some components are synchronously operated with their phases shifted).

The DC/DC converter 1A includes a rectifier bridge circuit 17 in addition to the transformer 11, the primary-side half-bridge circuit 12, and the LLC circuit 10, which are described above. In the rectifier bridge circuit 17, two diodes 18 arranged in the forward direction are connected in series to each other. Three of each of the components are provided to correspond to the respective phases.

To be specific, the DC/DC converter 1A includes a first transformer 11_1, a second transformer 11_2, a third transformer 11_3, a first primary-side half-bridge circuit 12 (first leg 12_1), a second primary-side half-bridge circuit 12 (second leg 12_2), a third primary-side half-bridge circuit 12 (third leg 12_3), a first LLC circuit 10_1, a second LLC circuit 10_2, a third LLC circuit 10_3, a first rectifier bridge circuit 17_1, a second rectifier bridge circuit 17_2, and a third rectifier bridge circuit 17_3.

The first transformer 11_1, the first leg 12_1, the first LLC circuit 10_1, and the first rectifier bridge circuit 17_1 constitute the U-phase. The second transformer 11_2, the second leg 12_2, the second LLC circuit 10_2, and the second rectifier bridge circuit 17_2 constitute the V-phase. The third transformer 11_3, the third leg 12_3, the third LLC circuit 10_3, and the third rectifier bridge circuit 17_3 constitute the W-phase.

On the primary side of the DC/DC converter 1A, a primary-side positive main line 19 connected to the positive side of the DC power source 2 and a primary-side negative main line 20 connected to the negative side of the DC power source 2 are arranged. Between the primary-side positive main line 19 and the primary-side negative main line 20, a DC voltage Vdc is applied. Each of the first leg 12_1, the second leg 12_2, and the third leg 12_3 is connected between the primary-side positive main line 19 and the primary-side negative main line 20. A primary-side smoothing capacitor 21 is also connected between the primary-side positive main line 19 and the primary-side negative main line 20.

First upper intermediate wiring 22_1 on the primary side is connected between a portion of the first leg 12_1 between the two power devices 15 and an end of the primary coil 11a on the positive side of the first transformer 11_1. Second upper intermediate wiring 22_2 on the primary side is connected between a portion of the second leg 12_2 between the two power devices 15 and an end of the primary coil 11a on the positive side of the second transformer 11_2. Third upper intermediate wiring 22_3 on the primary side is connected between a portion of the third leg 12_3 between the two power devices 15 and an end of the primary coil 11a on the positive side of the third transformer 11_3.

The ends of the primary coils 11a on the negative side of the first transformer 11_1, the second transformer 11_2, and the third transformer 11_3 are connected in parallel to each other by primary-side lower intermediate wiring 23 via the resonant capacitors 13.

On the secondary side of the DC/DC converter 1A, a secondary-side positive main line 24 connected to the positive side of the output terminal and a secondary-side negative main line 25 connected to the negative side of the output terminal are arranged. Between the secondary-side positive main line 24 and the secondary-side negative main line 25, a DC voltage Vout is output. Each of the first rectifier bridge circuit 17_1, second rectifier bridge circuit 17_2, and third rectifier bridge circuit 17_3 is connected between the secondary-side positive main line 24 and the secondary-side negative main line 25. A secondary-side smoothing capacitor 26 is also connected between the secondary-side positive main line 24 and the secondary-side negative main line 25.

First upper intermediate wiring 27_1 on the secondary side is connected between a portion of the first rectifier bridge circuit 17_1 between the two diodes 18 and an end of the secondary coil 11b on the positive side of the first transformer 11_1. Second upper intermediate wiring 27_2 on the secondary side is connected between a portion of the second rectifier bridge circuit 17_2 between the two diodes 18 and an end of the secondary coil 11b on the positive side of the second transformer 11_2. Third upper intermediate wiring 27_3 on the secondary side is connected between a portion of the third rectifier bridge circuit 17_3 between the two diodes 18 and an end of the secondary coil 11b on the positive side of the third transformer 11_3.

The ends of the secondary coils 11b on the negative side of the first transformer 11_1, the second transformer 11_2, and the third transformer 11_3 are connected in parallel to each other via the secondary-side lower intermediate wiring 28.

As described above, the DC/DC converter 1A includes three sets of asymmetric half-bridge LLC circuits corresponding to the U-phase, the V-phase, and the W-phase, and performs interleaved operation. That is, the switching elements 15a (S1 to S6) of the first leg 12_1, the second leg 12_2, and the third leg 12_3 are subjected to switching control based on the above-described PWM signals with a phase difference of 120 degrees.

Thus, the DC/DC converter 1A is configured to convert the DC power and output the converted DC power unidirectionally from the primary side to the secondary side. In this DC/DC converter 1A, the circuit configuration and the adopted scheme provide the advantage that the capacitances of the primary-side smoothing capacitor 21 and the secondary-side smoothing capacitor 26 can be significantly reduced.

### (Control Operation of Controller)

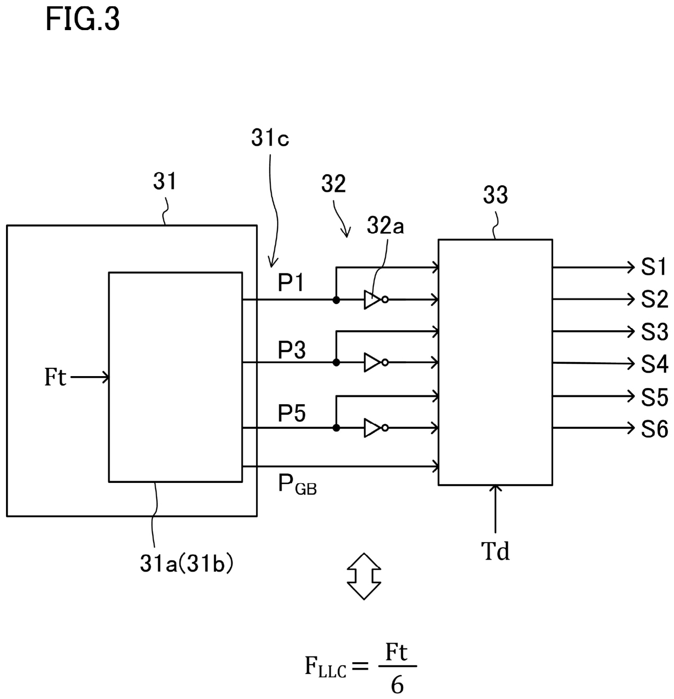

FIG. 3 is a block diagram showing a circuit configuration of the controller 30. As described above, the controller 30 includes the IC 31, the logic circuit 32, and the gate driver circuit 33.

An example of IC 31 is an MPU. The MPU has a predetermined task 31a of executing an interruption process according to an input set frequency. The IC 31 may be an FPGA or a CPLD as described above. In that case, the IC 31 would have a look-up table 31b instead of the task 31a. The IC 31 also has four pins 31c for input and output.

The MPU executes an interruption process according to the input set frequency Ft. The PWM signals P1, P3, and P5 are therefore output from the pins 31c. In the case of the FPGA or the CPLD, the PWM signal is output from each pin 31c based on the look-up table 31b. Each PWM signal is branched into two signals, i.e., the signal as it is and a signal inverted by the NOT-gate 32a, in the logic circuit 32, and then input to the gate driver circuit 33.

The gate driver circuit 33 is electrically connected to each switching element S1 to S6. The gate driver circuit 33 outputs drive voltage in a predetermined switching pattern to the two switching elements 15a of each leg 12_1, 12_2, and 12_3 based on the branched signals.

One pin 31c of the IC31 outputs a signal PGB indicating the availability of the gate driver circuit 33. Td is a set value of the dead time input to the gate driver circuit 33.

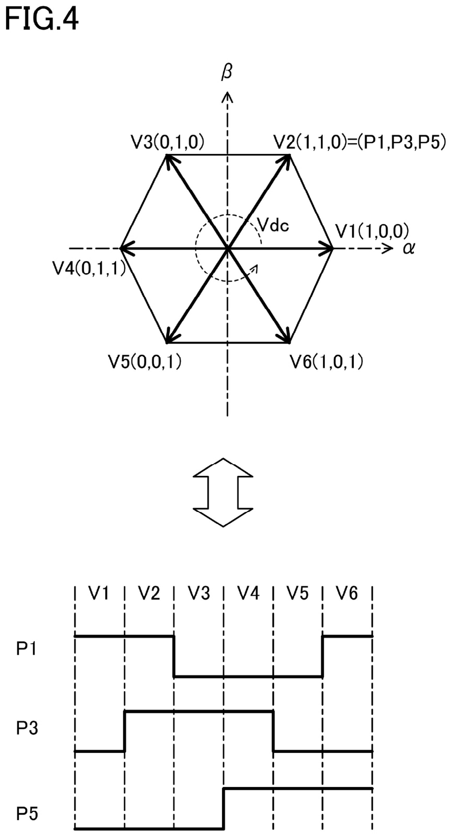

Referring to FIG. 4, the following describes the control operation of the controller 30. The upper diagram of FIG. 4 illustrates the concept of the fundamental space vector voltage. The lower diagram of FIG. 4 shows a PWM signal generated based on the concept of the fundamental space vector voltage.

In the conceptual diagram of the fundamental space vector voltage, the above-described DC voltage Vdc is rotated counterclockwise. One rotation (360 degrees) corresponds to one cycle of the set frequency Ft. Further, one rotation is divided into six equal sections corresponding to section voltages V1 to V6.

Any one of the PWM signals P1, P3, or P5 is switched at the start point (V1 to V6) of each section, and thus, the switching pattern is switched. "1" corresponds to a high signal, and represents that the switch is on. "0" corresponds to a low signal, and represents that the switch is off.

Accordingly, as shown in the lower diagram of FIG. 4, PWM signals corresponding to the respective section voltages are generated based on either a high signal or a low signal. For example, in the case of an MPU, a PWM signal, which is a high signal or a low signal, is output from each pin 31c by an interruption process.

Then, based on a control theory of a fundamental space vector, PWM signals of the respective phases can be generated with phase differences of 120 degrees. Three of the six equal parts generate high and low sections. A 50% duty cycle is generated inherently and can be used as a PWM signal for the LLC circuit.

According to such PWM signals, only one switching element is switched in each section area. Therefore, the number of switching operations can be reduced. The switching losses are also small. That is, high efficiency can be achieved by adopting such one-pulse control.

As described above, each PWM signal is generated according to the set frequency Ft input to IC 31. Therefore, in the case of the controller 30, the resonance frequency FLLC of the LLC circuit 10 is always one sixth of the set frequency Ft during the interruption process, as shown in the equation in the lower part of FIG. 3.

### (Design of LLC Circuit)

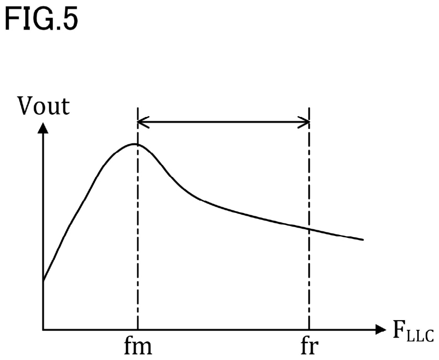

FIG. 5 shows a resonance curve of the LLC circuit 10. In the LLC circuit 10, the output voltage is typically controlled within an operating frequency range between a lower limit fm and an upper limit fr of the resonance frequency FLLC.

That is, the lower limit fm and the upper limit fr of the resonance frequency FLLC are determined based on the performance of the resonant inductance 14, the magnetizing inductance, and the resonant capacitor 13 that constitute the LLC circuit 10. Therefore, in the LLC circuit 10, as indicated by the arrow, the output voltage is controlled by adjusting the operating frequency (switching frequency) within the range between the lower limit fm and the upper limit fr.

Therefore, when the LLC circuit 10 is started with the set frequency Ft kept constant, an excessive short-circuit current may flow through the LLC circuit 10, possibly exceeding the allowable current range of the LLC circuit 10 (normally, the set frequency Ft is constant). Therefore, this DC/DC converter 1A is configured such that the set frequency Ft is variable only during startup.

For example, the DC/DC converter 1A, during startup, is operated at an operating frequency approximately two to three times the upper limit fr of the resonance frequency FLLC. After that, the set frequency Ft is forcibly varied so that the operating frequency is brought to a value less than or equal to the upper limit fr of the resonance frequency FLLC. As a result, the output current flows less easily because of the droop of the output voltage. Therefore, the DC/DC converter 1A can be started in a state where an inrush current that may occur at startup is suppressed.

### (Confirmation of Effects by Simulation)

In the above-described DC/DC converter 1A, a simulation test was conducted to confirm the effects of the technique disclosed herein.

The conditions of the simulation are as follows. The DC voltage Vdc input to the DC/DC converter 1A was set to 400 V. The winding ratio of each of the first transformer 11_1, the second transformer 11_2, and the third transformer 11_3 was set to 1:1. The set frequency Ft was set to 240 Hz. A DC resistor of 15 Ω was provided on the output side of the DC/DC converter 1A.

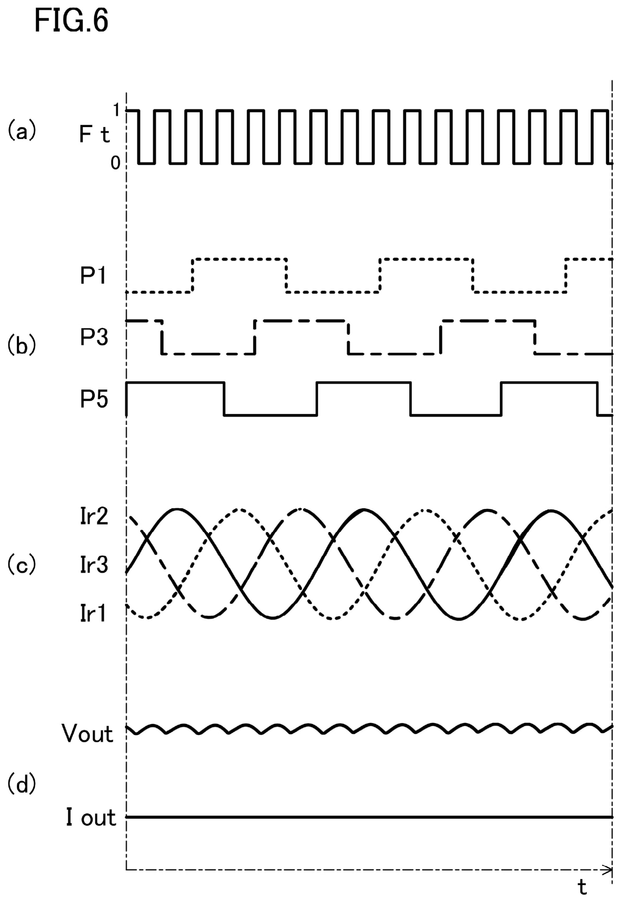

The results of the simulation are shown in FIG. 6. The (a) of FIG. 6 is a timing diagram of the set frequency Ft. The (b) of FIG. 6 shows a PWM signal output from each pin 31c of the IC 31. The (c) of FIG. 6 shows a waveform of a current output from each of the legs 12_1, 12_2, and 12_3. The (d) of FIG. 6 shows the waveforms of the current and voltage output from the DC/DC converter 1A.

It was confirmed that the DC/DC converter 1A enables outputs of a stable DC current and a stable DC voltage, as described above. Therefore, a high-performance DC/DC converter can be achieved at low cost by using an inexpensive IC 31.

### <Variation 1>

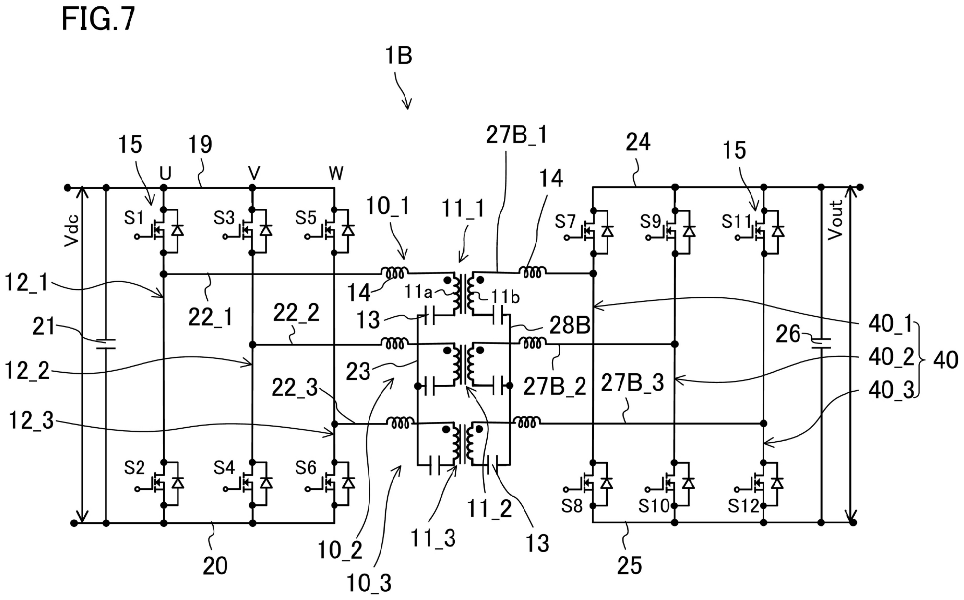

FIG. 7 shows Variation 1 (DC/DC converter 1B) of a power conversion device to which the technique disclosed herein is applicable. The DC/DC converter 1B employs a three-phase interleaved scheme, similarly to the aforementioned DC/DC converter 1A. Unlike the aforementioned DC/DC converter 1A, the DC/DC converter 1B is configured to convert and output DC power bidirectionally, that is, from the primary side to the secondary side, and from the secondary side to the primary side (a so-called CLLC circuit).

The input side configuration of this DC/DC converter 1B is the same as that of the aforementioned DC/DC converter 1A. The output side configuration of this DC/DC converter 1B differs from that of the aforementioned DC/DC converter 1A. Therefore, the description will be provided for different configurations; for similar configurations, the same reference characters will be used to simplify or omit the description (the same applies hereinafter).

On the secondary side of the DC/DC converter 1B, three secondary-side half-bridge circuits 40 (a fourth leg 40_1, a fifth leg 40_2, and a sixth leg 40_3) are arranged. Positive sides of the secondary coils 11b in the transformers 11_1, 11_2, and 11_3 of the respective phases are connected to corresponding portions of the three secondary-side half-bridge circuits 40 between the two power devices 15, via secondary-side upper intermediate wirings 27B (a first upper intermediate wiring 27B_1, a second upper intermediate wiring 27B_2, and a third upper intermediate wiring 27B_3). Each of these secondary-side upper intermediate wirings 27B is provided with a resonant inductance 14.

Negative sides of the secondary coils 11b in the transformers 11 of the respective phases are connected in parallel to each other by a secondary-side lower intermediate wiring 28B via the resonant capacitors 13 on the secondary side. That is, the LLC circuits 10 described above are arranged symmetrically on the primary side and the secondary side.

In the DC/DC converter 1B, converting and outputting DC power from the primary side to the secondary side is similar to the aforementioned DC/DC converter 1A. Further, when converting and outputting DC power from the secondary side to the primary side, PWM control may be performed with the same switching pattern as in the aforementioned DC/DC converter 1A.

### <Variation 2>

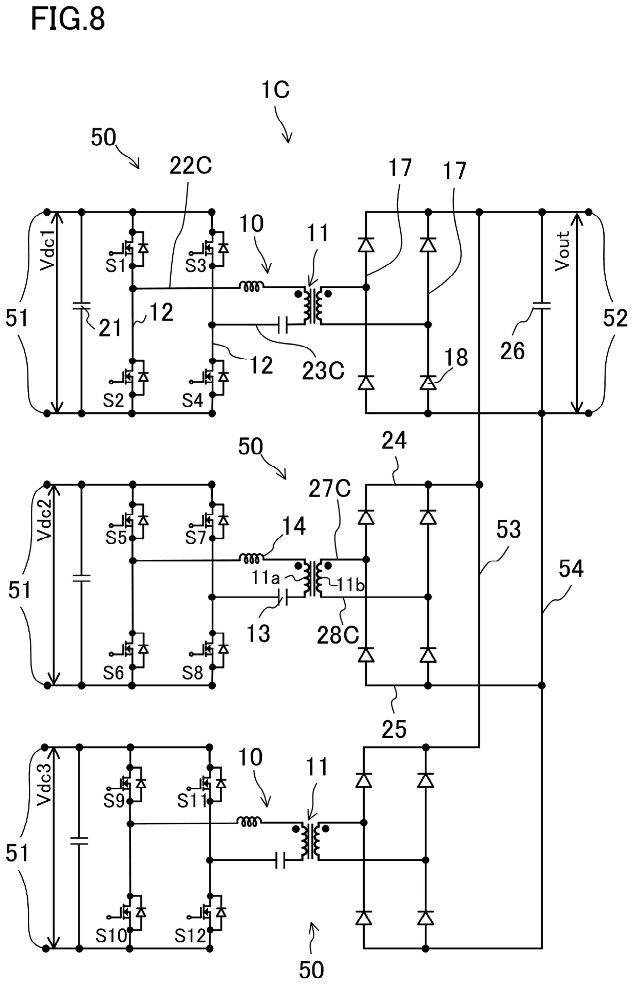

FIG. 8 shows Variation 2 (DC/DC converter 1C) of a power conversion device to which the technique disclosed herein is applicable. This DC/DC converter 1C is configured to perform parallel output using three full-bridge circuits (H-bridge circuits).

To be more specific, the DC/DC converter 1C includes three power conversion circuits 50. With these power conversion circuits 50, the DC/DC converter 1C is configured to convert DC power input from three pairs of input terminals 51, and output the converted DC power from a pair of output terminals 52.

Each of the power conversion circuits 50 is composed of one transformer 11, two primary-side half-bridge circuits 12, one LLC circuit 10, two rectifier bridge circuits 17, one primary-side smoothing capacitor 21, and the like.

An end of the primary coil 11a on the positive side is connected to a portion between two power devices 15 of one of the primary-side half-bridge circuits 12, via a primary-side upper intermediate wiring 22C. An end of the primary coil 11a on the negative side is connected to a portion between two power devices 15 of the other primary-side half-bridge circuit 12, via a primary-side lower intermediate wiring 23C. The resonant inductance 14 is arranged on the primary-side upper intermediate wiring 22C. The resonant capacitor 13 is arranged on the primary-side lower intermediate wiring 23C.

Ends of the secondary coil 11b and portions of the corresponding rectifier bridge circuits 17 between the two diodes 18 are connected by the upper and lower intermediate wirings 27C and 28C on the secondary side. The secondary-side positive main lines 24 of the power conversion circuits 50 are connected in parallel to each other by a bridged positive main line 53. The secondary-side negative main lines 25 of the power conversion circuits 50 are connected in parallel to each other by a bridged negative main line 54. One secondary-side smoothing capacitor 26 is arranged between the secondary-side positive main line 24 and the secondary-side negative main line 25, which are connected in parallel to each other.

With this circuit configuration, each input terminal 51 is arranged at a portion on the primary side of each power conversion circuit 50. The output terminals 52 are arranged at portions where the secondary sides of the power conversion circuits 50 are connected in parallel to each other. Thus, the DC/DC converter 1C is configured to convert the DC voltages Vdc1, Vdc2, and Vdc3 that are input to the three input terminals 51 on the primary side, and output a resulting DC voltage Vout to the single output terminal 52 on the secondary side.

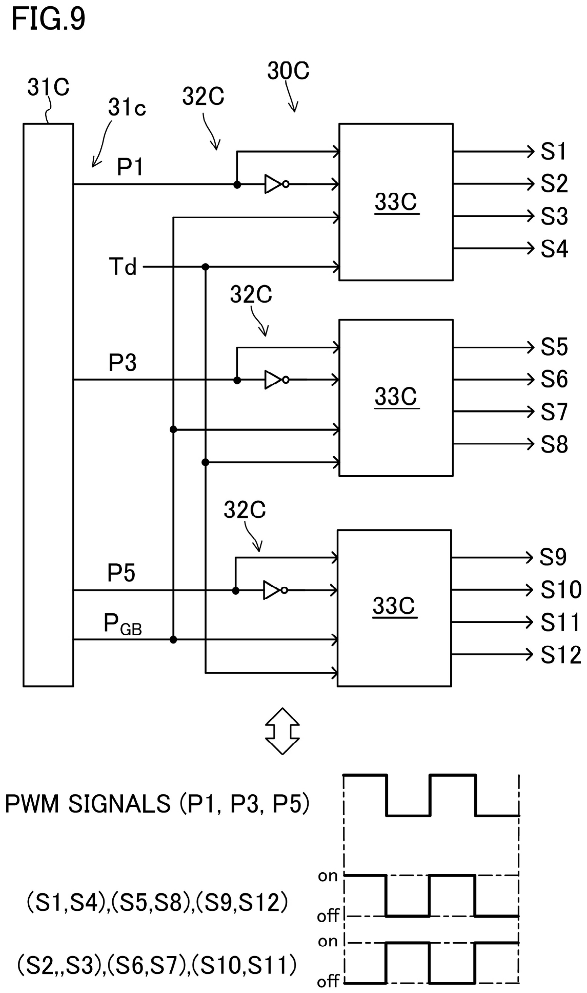

The upper diagram of FIG. 9 shows the circuit configuration of the controller 30C in this DC/DC converter 1C. The controller 30C is equipped with three logic circuits 32C and three gate driver circuits 33C, which correspond to the three power conversion circuits 50, respectively. Each pin 31c of the IC 31C that outputs PWM signals is connected, via a respective logic circuit 32C, to a respective gate driver circuit 33C. A signal PGB indicating the availability of the gate driver circuit 33C, and a set value Td of the dead time, are branched and input to each gate driver circuit 33C.

The lower diagram of FIG. 9 shows the PWM signals P1, P3, and P5 that are output in this circuit configuration and the switching patterns of the switching elements S1 to S12. Based on the PWM signal P1, drive voltages are output to the switching elements S1 and S4, and to the switching elements S2 and S3, with inverted switching patterns for each pair. Similarly, based on the PWM signal P3, drive voltages are output to the switching elements S5 and S8, and to the switching elements S6 and S7, with inverted switching patterns for each pair. Based on the PWM signal P5, drive voltages are output to the switching elements S9 and S12, and to the switching elements S10 and S11, with inverted switching patterns for each pair.

### <Variation 3>

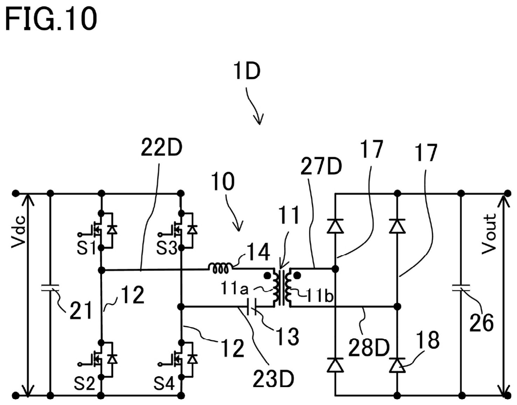

FIG. 10 shows Variation 3 (DC/DC converter 1D) of a power conversion device to which the technique disclosed herein is applicable. This DC/DC converter 1D is configured to convert DC power and output the converted DC power unidirectionally from the primary side to the secondary side using a single full-bridge circuit (H-bridge circuit).

That is, the DC/DC converter 1D includes one transformer 11 and two primary-side half-bridge circuits 12. The DC/DC converter 1D is a single-phase DC/DC converter. An end of the primary coil 11a on the positive side is connected to a portion between two power devices 15 of one of the primary-side half-bridge circuits 12, via a primary-side upper intermediate wiring 22D.

An end of the primary coil 11a on the negative side is connected to a portion between two power devices 15 of the other primary-side half-bridge circuit 12, via a primary-side lower intermediate wiring 23D. The resonant inductance 14 is arranged on the primary-side upper intermediate wiring 22D. The resonant capacitor 13 is arranged on the primary-side lower intermediate wiring 23D.

On the secondary side of this circuit, two rectifier bridge circuits 17 are arranged. Ends of the secondary coil 11b and portions between the two diodes 18 of the corresponding rectifier bridge circuits 17 are connected by the upper and lower intermediate wirings 27D and 28D on the secondary side.

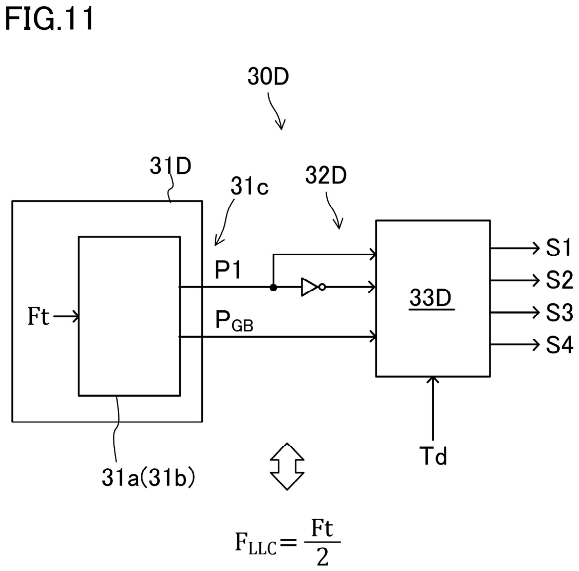

FIG. 11 shows the circuit configuration of the controller 30D in this DC/DC converter 1D. The controller 30D of the DC/DC converter 1D can be achieved by a circuit configuration corresponding to one of the power conversion circuits 50 in the controller 30C of the DC/DC converter 1C of Variation 2 (see FIG. 9).

The IC 31D may be an MPU, an FPGA, or a CPLD. In the case of the controller 30D, the resonance frequency FLLC of the LLC circuit 10 is always a half of the set frequency Ft during the interruption process, as shown in the equation in the lower part of FIG. 11.

### <Variation 4>

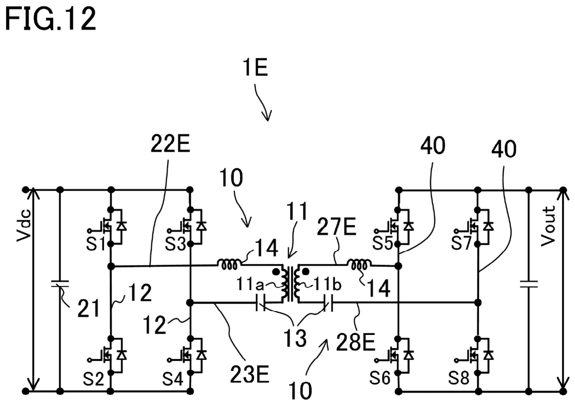

FIG. 12 shows Variation 4 (DC/DC converter 1E) of a power conversion device to which the technique disclosed herein is applicable. This DC/DC converter 1E is configured to convert and output DC power bidirectionally, that is, from the primary side to the secondary side and from the secondary side to the primary side, using a single full-bridge circuit (H-bridge circuit).

That is, the DC/DC converter 1E includes one transformer 11 and two primary-side half-bridge circuits 12. The DC/DC converter 1E is a single-phase DC/DC converter. An end of the primary coil 11a on the positive side is connected to a portion between two power devices 15 of one of the primary-side half-bridge circuits 12, via a primary-side upper intermediate wiring 22E.

An end of the primary coil 11a on the negative side is connected to a portion between two power devices 15 of the other primary-side half-bridge circuit 12, via a primary-side lower intermediate wiring 23E. The resonant inductance 14 is arranged on the primary-side upper intermediate wiring 22E. The resonant capacitor 13 is arranged on the primary-side lower intermediate wiring 23E.

On the secondary side of the circuit of the DC/DC converter 1E, two secondary-side half-bridge circuits 40 are arranged. The positive side of the secondary coil 11b in the transformer 11 is connected to a portion between the two power devices 15 of one of the secondary-side half-bridge circuits 40, via a secondary-side upper intermediate wiring 27E. The negative side of the secondary coil 11b in the transformer 11 is connected to a portion between the two power devices 15 of the other secondary-side half-bridge circuits 40, via a secondary-side lower intermediate wiring 28E.

The resonant inductance 14 is arranged on the secondary-side upper intermediate wiring 27E. The resonant capacitor 13 is arranged on the secondary-side lower intermediate wiring 28E. That is, the LLC circuits 10 described above are arranged symmetrically on the primary side and the secondary side.

The circuit configuration of the controller 30 in this DC/DC converter 1E is the same as that of the controller 30D of Variation 3 shown in FIG. 11. In the DC/DC converter 1E, converting and outputting DC power from the primary side to the secondary side is the same as the DC/DC converter 1D of Variation 3. Further, when converting and outputting DC power from the secondary side to the primary side, PWM control may be performed with the same switching pattern as in the DC/DC converter 1D.

The technique disclosed herein is not limited to the above-mentioned embodiments and also includes various other configurations. For example, the above-mentioned embodiments and variations are examples. Each of these embodiments and variations may be combined or modified as appropriate according to the specification of the practical DC/DC converter.

### DESCRIPTION OF REFERENCE CHARACTERS

- 1 (1A to 1E): DC/DC Converter (Power Conversion Device)
- 10: LLC Circuit
- 11: Transformer
11a Primary Coil
11b Secondary Coil
- 12: Primary-Side Half-Bridge Circuit
- 13: Resonant Capacitor
- 14: Resonant Inductance (Leakage Inductance)
- 15: Power Device
15a Switching Element
15b Freewheeling Diode
- 16: Primary-Side Intermediate Wiring
- 17: Rectifier Bridge Circuit
- 18: Diode
- 19: Primary-Side Positive Main Line
- 20: Primary-Side Negative Main Line
- 21: Primary-Side Smoothing Capacitor
- 22: Primary-Side Upper Intermediate Wiring
- 23: Primary-Side Lower Intermediate Wiring
- 24: Secondary-Side Positive Main Line
- 25: Secondary-Side Negative Main Line
- 26: Secondary-Side Smoothing Capacitor
- 27: Secondary-Side Upper Intermediate Wiring
- 28: Secondary-Side Lower Intermediate Wiring
- 30: Controller
- 31: IC
- 32: Logic Circuit
- 33: Gate Driver Circuit

## Claims

1. A power conversion device configured to convert input DC power and output the DC power thus converted, the device comprising:
at least one transformer having a primary coil and a secondary coil;
at least one primary-side half-bridge circuit in which two power devices are connected in series to each other, the power devices each including a switching element and a freewheeling diode connected in antiparallel with the switching element;
an LLC circuit including a resonant capacitor connected to one end of the primary coil, and a primary-side intermediate wiring that connects another end of the primary coil to a portion between the two power devices of the primary-side half-bridge circuit; and
a controller configured to control the power conversion device,
wherein
the controller is configured to generate a PWM signal based on control theory of fundamental space vector voltage and control switching of each of the switching elements based on the PWM signal.

2. The power conversion device of claim 1, wherein
the controller includes:
an IC; and
a gate driver circuit electrically connected to the IC and each of the switching elements, and
the IC, according to a set frequency input thereto, generates the PWM signal based on either a high signal corresponding to "1" or a low signal corresponding to "0," and outputs the PWM signal to the gate driver circuit via a logic circuit, whereby the gate driver circuit outputs drive power in a predetermined switching pattern to each of the switching elements.

3. The power conversion device of claim 2, wherein
the IC is any one of an MPU, an FPGA, or a CPLD.

4. The power conversion device of claim 2, wherein
the set frequency is varied only during startup.

5. The power conversion device of claim 1, wherein
the at least one transformer comprises one transformer,
the at least one primary-side half-bridge circuit comprises two primary-side half-bridge circuits,
the power conversion device further comprises:
two rectifier bridge circuits in each of which two diodes are connected in series to each other; and
a secondary-side intermediate wiring connecting each of ends of the secondary coil and a portion between the two diodes of a corresponding one of the rectifier bridge circuits, and
the power conversion device is configured to convert the DC power and unidirectionally output the DC power thus converted, from a primary side to a secondary side.

6. The power conversion device of claim 1, wherein
the at least one transformer comprises one transformer,
the at least one primary-side half-bridge circuit comprises two primary-side half-bridge circuits,
the power conversion device further comprises:
two secondary-side half-bridge circuits in each of which the two power devices are connected in series to each other; and
a secondary-side intermediate wiring connecting each of ends of the secondary coil and a portion between the two power devices of a corresponding one of the secondary-side half-bridge circuits, and
the power conversion device is configured to convert the DC power and bidirectionally output the DC power thus converted, from a primary side to a secondary side and from the secondary side to the primary side.

7. The power conversion device of claim 1, comprising:
three power conversion circuits, whereby the DC power input from three pairs of input terminals is converted, and the DC power thus converted is output from a pair of output terminals, wherein
each of the power conversion circuits includes:
one transformer of the at least one transformer;
two primary-side half-bridge circuits of the at least one primary-side half-bridge circuit;
the LLC circuit;
two rectifier bridge circuits in each of which two diodes are connected in series to each other; and
a secondary-side intermediate wiring connecting each of ends of the secondary coil and a portion between the two diodes of a corresponding one of the rectifier bridge circuits, and
each of the input terminals is arranged at a portion on a primary side of a corresponding one of the power conversion circuits, and the output terminals are arranged at a portion where secondary sides of the power conversion circuits are connected in parallel to each other, whereby the DC power is converted and the DC power thus converted is output unidirectionally from the primary side to the secondary sides.

8. The power conversion device of claim 1, wherein
a three-phase interleaved scheme is employed,
three of each of the transformer, the primary-side half-bridge circuit, and the LLC circuit are provided to correspond to the three phases,
the power conversion device further comprises:
three rectifier bridge circuits in each of which two diodes are connected in series to each other;
a secondary-side upper intermediate wiring connecting each of positive sides of the secondary coils in the transformers of the respective phases and a portion between the two diodes in a corresponding one of the rectifier bridge circuits;
a secondary-side lower intermediate wiring connecting each of negative sides of the secondary coils in the transformers of the respective phases in parallel to each other; and
a primary-side lower intermediate wiring connecting each of negative sides of the primary coils in parallel to each other via the resonant capacitor, and
the power conversion device is configured to convert the DC power and unidirectionally output the DC power thus converted, from a primary side to a secondary side.

9. The power conversion device of claim 1, wherein
a three-phase interleaved scheme is employed,
three of each of the transformer, the primary-side half-bridge circuit, and the LLC circuit are provided to correspond to the three phases,
the power conversion device further comprises:
three secondary-side half-bridge circuits in each of which the two power devices are connected in series to each other;
a secondary-side upper intermediate wiring connecting each of positive sides of the secondary coils in the transformers of the respective phases and a portion between the two power devices in a corresponding one of the secondary-side half-bridge circuits;
a primary-side lower intermediate wiring connecting each of negative sides of the primary coils in parallel to each other via the resonant capacitor; and
a secondary-side lower intermediate wiring connecting each of negative sides of the secondary coils in the transformers of the respective phases in parallel to each other via a secondary-side resonant capacitor, and
the power conversion device is configured to convert the DC power and bidirectionally output the DC power thus converted, from a primary side to a secondary side and from the secondary side to the primary side.

10. A method of controlling a power conversion device employing an LLC scheme, the method comprising:
generating, using an IC, a PWM signal based on control theory of a fundamental space vector; and
controlling switching of each of switching elements in a half-bridge circuit provided in the power conversion device based on the PWM signal.

11. The method of claim 10, wherein
the IC is any one of an MPU, an FPGA, or a CPLD.

12. The method of claim 10, wherein
a set frequency that is input to the IC to output the PWM signal is variable only during startup.
